# EUROPÄISCHE PATENTANMELDUNG

(11) **EP 2 020 537 A2**
(43) Veröffentlichungstag der Anmeldung: **04.02.2009**
(21) Anmeldenummer: 08012562.8
(22) Anmeldetag: 11.07.2008
(51) Int. Cl.: F16H 59/02

(54) **Schalteinheit für ein elektronisch geschaltetes Getriebe**

(30) Priorität: 01.08.2007 DE 102007036086
(71) Anmelder: Audi AG, 85045 Ingolstadt (DE)
(72) Erfinder: Muigg, Andreas, 85055 Ingolstadt (DE); Nabholz, Andreas, 85055 Ingolstadt (DE); Meurle, Jürgen, 85055 Ingolstadt (DE); Zwicknagl, Thomas, 85049 Ingolstadt (DE)
(74) Vertreter: Thielmann, Frank

(57) **Zusammenfassung**

Schalteinheit für ein elektronisch geschaltetes Getriebe, umfassend einen Wählhebel, der zum Anwählen von verschiedenen getriebeseitig einzulegenden Fahrstufen in verschiedene Wählpositionen bewegbar ist, wobei über den Wählhebel (2) wenigstens vier verschiedene Fahrstufen (R, P, N, D) anwählbar sind, wobei der Wählhebel (2) aus einer stabilen Grundposition (12) heraus in zwei entgegengesetzte Richtungen bewegbar ist, entlang welcher jeweils wenigstens drei nicht rastierte, über einen Druckpunkt (8) definierte Wählpositionen (13a, ..., 13f) realisiert sind, aus denen der Wählhebel (2) automatisch in die Grundposition (12) rückstellbar ist.

## Beschreibung

Die Erfindung betrifft eine Schalteinheit für ein elektronisch geschaltetes Getriebe, umfassend einen Wählhebel, der zum Anwählen von verschiedenen getriebeseitig einzulegenden Fahrstufen in verschiedene Wählpositionen bewegbar ist.

In Zukunft werden Fahrzeuge mit elektronisch geschalteten Getrieben ausgerüstet, bei denen zwischen dem Getriebe und der Schalteinheit keine mechanische Verbindung mehr gegeben ist. Vielmehr werden zwischen Schalteinheit und Getriebe nur noch elektronische Signale ausgetauscht, die entweder von der Schalteinheit beim Anwählen einer gewünschten Fahrstufe über den Wählhebel erzeugt und an das Getriebesteuergerät übertragen werden, oder die getriebeseitig nach Einlegen einer gewünschten Fahrstufe an die Schalteinheit gegeben werden, wo der jeweilige Fahrstufenzustand angezeigt wird. Zum Anwählen einer Fahrstufe ist an der Schalteinheit ein Wählhebel vorgesehen, der in verschiedene Wählpositionen bewegbar ist, wobei die jeweilige Wählposition einer bestimmten einzulegenden Fahrstufe zugeordnet ist. Bekannt sind dabei zum einen lenkstockseitig angeordnete Schalteinheiten wie auch vornehmlich Schalteinheiten an der Mittelkonsole.

Mittels bekannter Schalteinheiten für elektronisch geschaltete Getriebe sind nur die Fahrstufen R (Rückwärtsfahrstufe), N (Leerlauf) und D (Dauerfahrstufe) schaltbar. Die P-Fahrstufe (Parkstufe) ist über eine separate Taste einzulegen. D. h., der Fahrer muss - anders er es von einem üblichen mechanisch geschalteten Automatikgetriebe bzw. dessen mechanischer Schalteinheit her kennt - die Parkstufe mittels einer ausgelagerten Taste einlegen und nicht wie bei mechanischen Automatikgetrieben über den Wählhebel, der hierfür bekanntlich in die vorderste Wählposition geschoben wird. Dies ist insoweit problematisch, als viele Fahrer eben das bekannte Schaltschema P-R-N-D seit langem vom mechanisch geschalteten Automatikgetriebe her kennen und Schwierigkeiten haben, wenn sie auf ein neues Fahrzeug mit elektronisch geschaltetem Getriebe umsteigen. Hier besteht die Gefahr, dass der Fahrer in sein gewohntes Bedienschema zurückfällt und den Wählhebel ganz nach vorne bewegt, in der Erwartung, dass darüber wie bisher bekannt die P-Fahrstufe eingelegt wird. Tatsächlich aber wurde der Rückwärtsgang, also die R-Fahrstufe eingelegt. Geht nun der Fahrer in der Annahme, P gewählt zu haben, von der Bremse, so setzt sich das Fahrzeug abrupt rückwärts in Bewegung, woraus schlimmstenfalls ein Unfall resultieren kann.

Der Erfindung liegt damit das Problem zu Grunde, eine Schalteinheit anzugeben, die die Möglichkeit des einfachen Einlegens der P-Fahrstufe ermöglicht und für den Fahrer einfach zu bedienen ist.

Zur Lösung dieses Problems ist es bei einer Schalteinheit der eingangs genannten Art erfindungsgemäß vorgesehen, dass über den Wählhebel wenigstens vier verschiedene Fahrstufen anwählbar sind, wobei der Wählhebel aus einer stabilen Grundposition heraus in zwei entgegengesetzte Richtungen bewegbar ist, entlang welcher jeweils wenigstens drei nicht rastierte, über einen Druckpunkt definierte Wählpositionen realisiert sind, aus denen der Wählhebel automatisch in die Grundposition rückstellbar ist.

Bei der erfindungsgemäßen Schalteinheit sind insgesamt wenigstens sieben separate Positionen realisiert, die es ermöglichen, die vier Fahrstufen P-R-N-D anwählen zu können. Der Wählhebel selbst befindet sich, wenn er nicht aktiv vom Fahrer bewegt wird, stets in einer Grundposition, in die er automatisch zurückbewegt wird, wenn er aus ihr heraus in eine der ihr in der jeweiligen Richtung nachgeschalteten Wählpositionen bewegt wurde. Den Wählpositionen sind variable Fahrstufen in Abhängigkeit der der Grundposition zugeordneten variablen Fahrstufe zugeordnet. D. h., zu Beginn oder während der Fahrt befindet sich der Wählhebel in der Grundposition, der zu jedem Zeitpunkt eine bestimmte entweder zuvor vom Fahrer aktiv oder getriebeseitig automatisch eingelegte Fahrstufe zugeordnet ist, und aus der heraus der Wählhebel in die eine oder andere Richtung bewegt werden kann, je nachdem, welche Fahrstufe der Fahrer in dem in jedem Fall fest implementierten Fahrstufenschema P-R-N-D anwählen möchte. Dieses Fahrstufenschema kann bei Ausbildung von jeweils drei über Druckpunkte realisierten bzw. haptisch erfühlbaren Wählpositionen vor und hinter der Grundposition realisiert werden, jede beliebige Fahrstufe kann durch Bewegen des Wählhebels in der einen oder anderen Richtung angewählt werden, jeweils abhängig davon, welche ebenfalls variable Fahrstufe der Grundposition momentan zugeordnet ist. Der Wählhebel selbst ist monostabil, d. h., er befindet sich immer in der Grundposition, in die er automatisch über eine entsprechende Rückstelleinrichtung zurückgeführt wird.

Die erfindungsgemäße Schalteinheit bietet eine Reihe von Vorteilen. Zum einen kann durch die Realisierung von wenigstens drei über jeweilige Druckpunkte definierte Wählpositionen in jeder Hebelbewegungsrichtung die P-Fahrstufe in das Schaltschema integriert werden, und zwar in der an sich bekannten Reihenfolge P-R-N-D. Hierüber ist es zum einen möglich, dem Fahrer das ihm seit langem bekannte Schaltschema auch bei elektronisch geschalteten Getrieben bzw. elektronischen Schalteinheiten anzubieten. Des Weiteren ist es möglich, spezifischen US-Vorschriften, die angeben, dass die P-Fahrstufe nach der R-Fahrstufe vorzusehen ist, zu erfüllen. Die monostabile Ausgestaltung, bei der also der Wählhebel stets in der Grundposition steht, hat keine "zeigende Wirkung", im Gegensatz zu bekannten rastierten Wählhebeln, die also in der jeweiligen Wählposition verbleiben. Dies hat den Vorteil, dass der Hebel nicht über eine geeignete Rückführeinrichtung aus einer rastierten Wählposition zurückgeführt werden muss, wenn der Fahrer das Fahrzeug beispielsweise in der D-Fahrstufe abstellt, das Getriebe aber automatisch die P-Fahrstufe beim Abstellen einlegt. Bei einer rastierten Hebelausführung müsste, damit die Getriebeposition der Wählhebelposition beim erneuten Anlassen entspricht, der Wählhebel aktiv in die P-Wählposition gestellt werden, was vorteilhaft bei einer monostabilen Ausgestaltung mit stets gegebener Rückstellung des Wählhebels in die Grundposition vorteilhaft entfallen kann. Vielmehr kann getriebeseitig automatisch die P-Fahrstufe eingestellt werden, ohne dass wählhebelseitig etwas zu ändern wäre. Dem Wählhebel bzw. der Grundposition wird beim erneuten Anlassen automatisch die P-Fahrstufe zugeordnet, ausgehend von welcher dann der Wählhebel gemäß dem vorgegebenen Schaltschema zum Anwählen einer anderen Fahrstufe bewegt werden kann. Auch bei einem Systemausfall befindet sich der Wählhebel stets in der selben Grundposition, der Fahrer kann über ein Display oder eine andere Anzeige gewarnt werden.

Nach einer ersten Erfindungsausgestaltung kann der Wählhebel gegen ein mechanisches Rückstellelement in die jeweilige Richtung bewegbar sein. Bei dem mechanischen Rückstellelement handelt es sich bevorzugt um eine Feder, die beim Bewegen aus der Grundposition in die erste, zweite oder dritte Wählposition entsprechend gespannt wird. Denkbar ist es auch, das mechanische Rückstellelement quasi in den Wählhebel zu integrieren, und zwar über eine mechanische Führung des Hebels auf einer Kulisse mitels einer federbelasteten Rolle, die auf der Kulisse gefedert läuft. Die Kulisse und die Feder sind so ausgelegt, dass die die Rolle belastende Feder den Hebel unter Rücklauf der Rolle auf der Kulisse stets in die Grundposition bringen kann. Alternativ kann der Wählhebel auch über ein elektrisches oder elektro-mechanisches oder hydraulisches oder pneumatisches Rückstellmittel zurückgestellt werden. Denkbar ist beispielsweise ein Elektromagnet, der nach Bewegen des Wählhebels in eine bestimmte Wählposition und Erfassen der selben über eine geeignete Sensorik angesteuert wird, um den Wählhebel wieder in die Grundposition zurückzuziehen. Auch hydraulische oder pneumatische Rückstellmittel, beispielsweise in Form geeigneter Stellzylinder, sind denkbar.

Die einzelnen Druckpunkte selbst, die über die gesamte Bewegungslänge realisiert sind, sind zweckmäßigerweise über eine mechanische Führung des Wählhebels, insbesondere eine Kulissenführung, auf oder in welcher der Wählhebel gleitet, realisiert. Eine solche Führung weist beispielsweise ein gewelltes Führungsprofil auf, auf dem das untere Ende des schwenkbaren Wählhebels beispielsweise über eine federbelastete Rolle läuft. Jede Wählposition kann beispielsweise über ein Wellental realisiert sein, in das die Führungsrolle einläuft, was haptisch fühlbar ist. Zum Herausbewegen aus der Senke muss gegen das wieder ansteigende Profil gearbeitet werden, was ebenfalls haptisch fühlbar ist. Die automatische Rückstellung des Hebels kann wie beschrieben auch über die hebelseitig integrierte federbelastete Rolle selbst erfolgen, wobei in diesem Fall die Kulisse keine Senken aufweist.

Ferner sind Kraftfahrzeuge bekannt, die neben dem Automatikschaltmodus auch die Möglichkeit haben, einzelne Gänge manuell über eine Tippschaltung zu schalten. Um es auch bei einem Kraftfahrzeug mit einer erfindungsgemäßen Schalteinheit zu ermöglichen, ist der Schalteinheit zweckmäßigerweise ein Schaltmittel zugeordnet, über das die Funktionalität der Schalteinheit auf eine manuelle Tippschaltung einzelner Gänge reversibel umschaltbar ist. Bei dieser Erfindungsausgestaltung kann der Fahrer also durch Betätigung eines Schaltmittels, beispielsweise einer Taste am Lenkrad, die Funktionalität der Schalteinheit ändern von der herkömmlichen Funktionalität, im Rahmen welcher die bekannten Fahrstufen P-R-N-D wählbar sind, auf eine manuelle Tippschaltung, im Rahmen welcher der Wählhebel ausgehend von der Grundposition durch Bewegen nach vorne bis zum nächstfolgenden Druckpunkt oder in die entgegensetzte Richtung bis zum nächstfolgenden Druckpunkt einzelne Gänge herauf- oder heruntergeschaltet werden können. Hier wird also eine manuelle Tippschaltung in der selben Schaltgasse realisiert, in der im Rahmen der Grundfunktionalität der Schalteinheit die automatisch geschalteten Fahrstufen angewählt werden können. Dabei kann, nachdem in jeder Bewegungsrichtung ausgehend von der Grundposition drei dezidierte Druckpunkte gegeben sind, ausgehend von der Grundposition bei Bewegen in wenigstens zwei aufeinanderfolgende Druckpunkte in eine Richtung mit Erreichen jedes Druckpunkts der Gang herauf- oder herunterschaltbar sein. D. h., wenn der Wählhebel vom Fahrer in den ersten Druckpunkt nach hinten gezogen wird, wird um einen ersten Gang heruntergeschalten, wird der Wählhebel weiter in den zweiten Druckpunkt gezogen, wird ein zweiter Gang heruntergeschalten. Grundsätzlich wäre es sogar denkbar, auch den in der jeweiligen Richtung folgenden dritten Druckpunkt als dritten Schaltpunkt zu nutzen. Dies ermöglicht ein wesentlich schnelleres Schalten im Rahmen der Tippschaltung als herkömmlich, wo der Wählhebel zum Schalten jeweils eines Ganges von der Grundposition in die Schaltposition bewegt und wieder losgelassen werden muss, für das Schalten eines weiteren Gangs ist dieser Vorgang noch einmal durchzuführen. Zum schnellen Schalten zieht bei der erfindungsgemäßen Schalteinheit der Fahrer den Wählhebel lediglich über zwei oder drei Druckpunkte, das Getriebe folgt sofort.

Alternativ zur Verwendung der einzigen Schaltgasse sowohl zur Realisierung der herkömmlichen Fahrstufenanwahl als auch zur Realisierung der manuellen Tippschaltung kann bei der erfindungsgemäßen Schalteinheit auch eine von einer ersten Schaltgasse, längs welcher der Wählhebel zum Schalten der Fahrstufen bewegbar ist, eine zweite Schaltgasse abzweigen, in welcher der Wählhebel für eine manuelle Tippschaltung einzelner Gänge bewegbar ist. Soll also auf Tippschaltung umgeschaltet werden, so muss der Fahrer den Wählhebel wieder ausgehend von der Grundposition beispielsweise ein kurzes Stück nach rechts in die zweite Schaltgasse schieben, wo dann die Tippschaltung gegeben ist. Grundsätzlich besteht aber auch hier die Möglichkeit, dass der Wählhebel ausgehend von einer Grundposition in dieser zweiten Schaltgasse in zwei entgegengesetzte Richtungen bewegbar ist, längs welcher wenigstens zwei nicht rastierte, über einen Druckpunkt definierte Wählpositionen realisiert sind, aus denen der Wählhebel automatisch in die Grundposition rückstellbar ist, wobei ausgehend von der Grundposition bei Bewegen in wenigstens zwei aufeinanderfolgende Druckpunkte in einer Richtung mit Erreichen jedes Druckpunkts ein Gang herauf- oder herunterschaltbar ist. D. h., auch bei Verwendung einer separaten zweiten Tippschaltungs-Schaltgasse kann durch Realisierung zweier oder mehrerer Druckpunkt ein wesentlich schnelleres Schalten erreicht werden, da der Wählhebel beispielsweise zum Herunterschalten zweier Gänge lediglich ein einziges mal in die zwei aufeinanderfolgenden Druckpunkte zu ziehen ist.

Ist dem Wählhebel in der Grundposition, in der er sich wie beschrieben stets befindet, die P-Fahrstufe zugeordnet, beispielsweise bei einem Neustart des Wagens, so können die nachfolgenden Fahrstufen R, N und D nur durch Bewegen in eine Richtung, nämlich durch nach hinten ziehen des Wählhebels angewählt werden, in Folge der Realisierung des starren Schaltschemas P-R-N-D. Um eine Bewegung in die andere Richtung, in der keine Fahrstufe schaltbar ist, auszuschließen, kann die Wählhebelbewegung grundsätzlich aus der Grundposition oder aus oder in eine beliebige Wählposition mechanisch sperrbar sein. D. h., über diese Sperrmöglichkeit kann der Wählhebel egal in welche Richtung nur soweit bewegt werden, wie dem jeweils nächstfolgenden Druckpunkt bzw. der nächstfolgenden Wählposition überhaupt eine anwählbare Fahrstufe zugeordnet ist. Alle anderen Wählhebelpositionen sind mechanisch gesperrt, wozu beispielsweise ein mechanisches oder elektromechanisches Sperrelement vorgesehen ist, z. B. ein Elektromagnet, der eine Sperrklinke oder dergleichen stellt, die in eine entsprechende Führungs- oder Sperrkulisse, die entsprechende Sperraufnahmen für die Klinke aufweist, eingreift, und eine entsprechende Bewegung des Wählhebels verhindert. Alternativ zu dieser Sperrung der Wählhebelbewegung kann auch vorgesehen sein, dass der Wählhebel grundsätzlich immer bewegbar ist, also auch in eine Wählposition bringbar ist, der keine Fahrstufe zugeordnet ist, wobei in diesem Fall dann aber zwangsläufig auch keine Fahrstufenschaltung erfolgt. Dies gilt insoweit natürlich nur, als der Fahrer nicht auf die optionale manuelle Tippschaltung umgeschaltet hat, der alle drei Druckpunkte bzw. Wählpositionen zulässig zugeordnet sind. Sind beispielsweise in jeder Richtung nur zwei Druckpunkte oder Wählpositionen zugeordnet, so kann die jeweils dritte Position beispielsweise ebenfalls mechanisch gesperrt werden oder in dieser trotz Wählhebelbewegung keine Schaltung erfolgen.

Um den Fahrer stets mitteilen zu können, welche Fahrstufe er gerade durch die entsprechende Wählhebelbewegung angewählt hat bzw. welche Fahrstufe eingelegt ist, wenn der Wählhebel in der Grundposition ist, ist zweckmäßigerweise an der Schalteinheit ein Anzeigemittel vorgesehen, gegebenenfalls kann hier auch ein externes Anzeigemittel, z. B. im Kombiinstrument, zugeordnet sein, an dem die jeweils anwählbare und/oder eingelegte Fahrstufe darstellbar ist. Entweder kann dies nur ein einziges Anzeigemittel sein, beispielsweise ein kleines Display, das benachbart zur Grundposition angeordnet ist, und an dem bei einer Wählhebelbewegung die jeweils der gegebenen Wählhebelposition zugeordnete Fahrstufe angezeigt wird und an der nach Rückführung des Wählhebels in die Grundposition die eingelegte Fahrstufe angezeigt wird. Die grundsätzliche Fahrstufenabfolge P-R-N-D kann beispielsweise als fest installierte Darstellung an der Schalteinheit für die grundsätzliche Orientierung des Fahrers angegeben sein, so dass er also weiß, in welche Richtung er den Hebel ausgehend von der dargestellten Grundpositions-Fahrstufe bewegen muss.

Alternativ dazu kann das Anzeigemittel auch mehrere der Anzahl und vorzugsweise der Position an Grund- und Wählpositionen entsprechende Anzeigepositionen für die eingelegte und die anwählbaren Fahrstufen aufweisen. Bei dieser Erfindungsausgestaltung sind also maximal sieben Anzeigepositionen gegeben, an denen die dort jeweils grundsätzlich anwählbaren Fahrstufen angezeigt werden können. Je nachdem, welche Fahrstufe der Grundposition zugeordnet ist, ändert sich letztlich die Anzeige ständig, es leuchten jedoch maximal vier Anzeigen, die eben die überhaupt wählbaren Fahrstufen P-R-N-D anzeigen. Anzeigepositionen, die Wählpositionen ohne Möglichkeit zur Fahrstufenanwahl zugeordnet sind bzw. die gesperrten Wählpositionen zugeordnet sind, sind nicht in Betrieb.

Bei bekannten Fahrzeugen ist es mitunter möglich, eine Sportfahrstufe S anwählen zu können. Um es auch bei der erfindungsgemäßen Schalteinheit zu ermöglichen, kann entweder ein separates Schaltelement hierzu vorgesehen sein, das beispielsweise nur dann aktiviert werden kann, wenn die zuvor gewählte Fahrstufe die D-Fahrstufe ist, mithin also der Wählhebel-Grundposition zugeordnet ist. Denkbar wäre es aber auch, dass der Wählhebel ausgehend von der Grundposition in eine beispielsweise nach links abzweigende weitere Wählposition, in der er dann aber gegebenenfalls rastiert ist, bewegt werden kann. Diese Abzweigung liegt, sofern eine manuelle Tippschaltung mit separater zweiter Schaltgasse vorgesehen ist, zur Bewegungsrichtung in die zweite Schaltgasse entgegengesetzt.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung einer erfindungsgemäßen Schalteinheit einer ersten Ausführungsform,
- Fig. 2: eine Aufsicht auf die Schalteinheit aus Fig. 1 zur Darstellung der Wählhebelbewegbarkeit,
- Fig. 3 - 6: verschiedene Beispiele für die Zuordnung von Fahrstufen zu Wählhebelpositionen,
- Fig. 7: eine Aufsicht auf eine erfindungsgemäße Schalteinheit einer zweiten Ausführungsform, und
- Fig. 8: eine Prinzipdarstellung einer weiteren Möglichkeit einer mechanischen Hebelrückstellung..

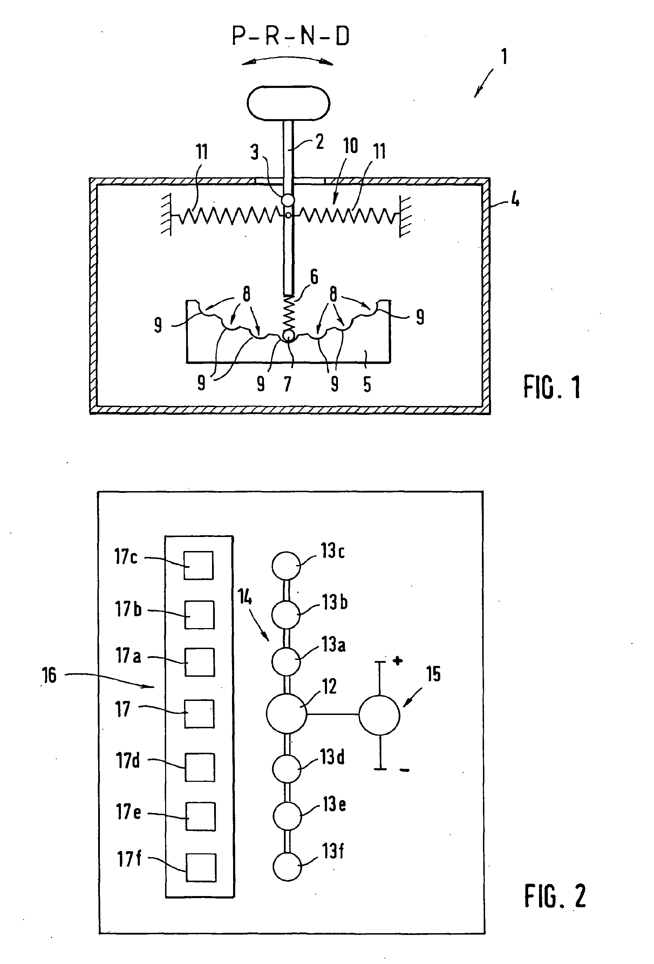

Fig. 1 zeigt eine erfindungsgemäße Schalteinheit 1, umfassend einen Wählhebel 2, der um eine Schwenkachse 3 schwenkbar ist. Ihm ist in einem Gehäuse 4 der Schalteinheit 1 eine mechanische Führung 5 in Form einer Kulissenführung zugeordnet, längs welcher er über ein über eine Feder 6 belastetes Laufelement 7 läuft. Die Führung 5 weist im gezeigten Beispiel sieben jeweils Druckpunkte 8 realisierende Eintiefungen 9 auf. Der Wählhebel 2 selbst ist gegen ein Rückstellelement 10, hier exemplarisch gebildet über zwei Federn 11, ausgehend von der in Fig. 1 gezeigten Grundstellung, bei der er sich in der mittleren der sieben ausgezeichneten Wählpositionen befindet, bewegbar. Diese mittlere Wählposition, definiert über den mittleren Druckpunkt 8, stellt die Grundposition dar, in die der Wählhebel 2 automatisch dann, wenn er entlastet wird, über das Rückstellelement 10 gebracht wird. Diese Position ist also stabil, während alle anderen Wählpositionen, definiert über die jeweiligen Druckpunkt 8, instabil sind, der Wählhebel 2 in diesen also nicht verrastet.

Fig. 2 zeigt eine Aufsicht auf die Schalteinheit 1 aus Fig. 1, wobei hier der Übersichtlichkeit halber der Wählhebel 2 selbst nicht dargestellt ist, jedoch das Schalt- oder Bewegungsschema. Gezeigt sind zum einen die Grundposition 12, definiert über den mittleren Druckpunkt 8 bzw. die mittlere Eintiefung 9 an der Führung 5, sowie die einzelnen Wählpositionen 13a - 13f, von denen jeweils drei in der einen und drei in der anderen Bewegungsrichtung, ausgehend von der Grundposition 12, anwählbar sind. Des Weiteren ist zu dieser Schaltgasse 14 eine zweite Schaltgasse 15 parallel gesetzt, in die der Wählhebel 2 überführt werden kann. Dort ist eine manuelle Tippschaltung möglich, d. h., der Fahrer kann hierüber durch Tippen nach vorne oder hinten Gänge herauf- oder herunterschalten. In dieser zweiten Schaltgasse 15 rastiert der Wählhebel 2, d. h., er wird nicht automatisch in die erste Schaltgasse 14, in der die Fahrstufen P-R-N-D anwählbar sind, zurückgestellt. Dies muss der Fahrer aktiv machen.

Vorgesehen ist ferner eine Anzeigevorrichtung 16, die im gezeigten Beispiel sieben Anzeigepositionen 17a - 17f aufweist, von denen jeweils eine der Grundposition 12 bzw. jeder Wählposition 13a - 13f zugeordnet ist.

Wie ausgeführt befindet sich der Wählhebel 2 in der Grundposition 12. Dieser kann eine beliebige der vier Fahrstufen P-R-N-D zugeordnet sein, je nachdem, welche vorher entweder getriebeseitig automatisch eingestellt oder vom Fahrer angewählt wurde. Die jeweils der Grundposition 12 momentan zugeordnete Fahrstufe wird über die ihr zugeordnete Anzeigeposition 17, die intuitiv direkt daneben positioniert ist, angezeigt. Die weiteren wählbaren Fahrstufen werden gemäß dem festen Schaltschema P-R-N-D mittels der den benachbarten Wählpositionen 13a - 13f zugeordneten Anzeigepositionen 17a - 17f dargestellt.

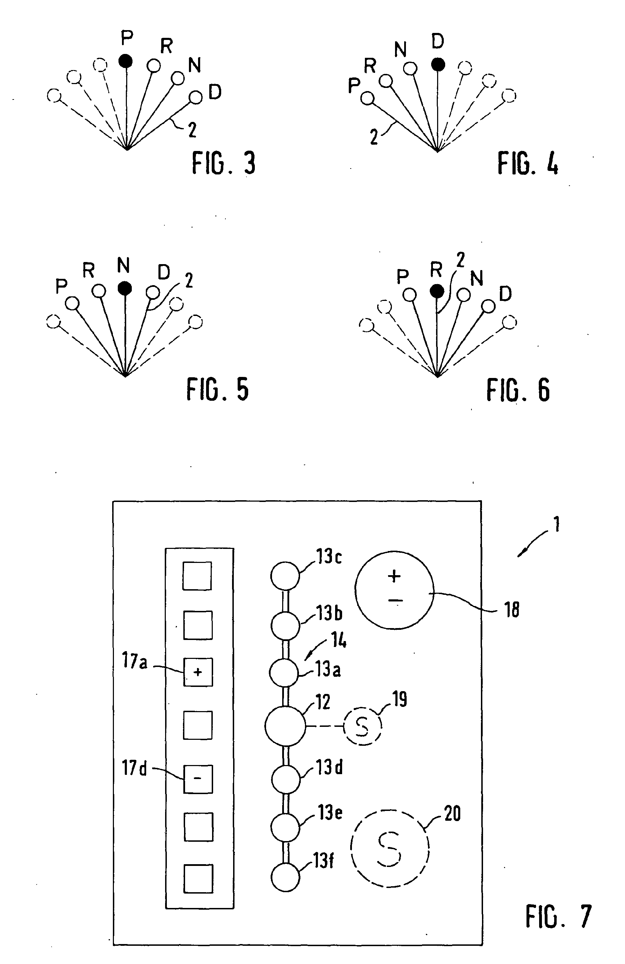

Die verschiedenen Schaltmöglichkeiten sind exemplarisch in den Fig. 3 - 6 dargestellt. Es sei angenommen, dass das Fahrzeug über eine automatische Parkstufeneinlegung verfügt. D. h., im Falle eines Neustarts des Fahrzeugs - zu welchem Zeitpunkt sich vorteilhafterweise der Wählhebel 2 immer in der Grundposition 12 befindet - ist der Grundposition 12 die Fahrstufe P, also die Parkstufe zugeordnet, was über die zugeordnete Anzeigeposition 17 dargestellt wird. Gemäß dem starren Schema P-R-N-D folgend, ist zum Anwählen der R-, N- und D-Fahrstufe der Wählhebel bezogen auf Fig. 2 nach unten zu bewegen. In den entsprechenden Anzeigepositionen 17d wäre zur Orientierung des Fahrers ein "R", in der Anzeigeposition 17e ein "N" und in der Anzeigeposition 17f ein "D" dargestellt. Der Fahrer erkennt also sofort, bis zu welcher Wählposition 13d, 13e, 13f er den Wählhebel zu bewegen hat, um die gewünschte Fahrstufe einzulegen. Es sei angenommen, dass der Fahrer die D-Fahrstufe einlegen möchte. Er zieht deshalb den Wählhebel 2 über die Wählpositionen 13d und 13e zugeordneten Druckpunkte 8 bis in den Druckpunkt 8, der die Wählposition 13f definiert. Das angezeigte D-Symbol in der Anzeigeposition 17f leuchtet beispielsweise etwas heller, um zu signalisieren, dass tatsächlich auch diese Fahrstufe gewählt ist. Wenn der Fahrer nun den Wählhebel los lässt, so erfasst die Sensorik die Wahl der D-Fahrstufe, gleichzeitig wird der Wählhebel 2 über das Rückstellelement 10 wieder in die Grundposition 12 zurückgestellt. In der Anzeigeposition 17 leuchtet dann, wenn die D-Fahrstufe eingelegt wurde, das D-Symbol auf. Die Bewegung in die entgegengesetzte Richtung, also in die Wählpositionen 13a - 13c, ist, nachdem diesen, siehe das Schema gemäß Fig. 3, keine anwählbare Fahrstufe zugeordnet ist, beispielsweise über ein entsprechendes Sperrelement, z. B. ein elektromechanisches Sperrelement, gesperrt.

Mit dem Einlegen der D-Fahrstufe und der Rückstellung des Wählhebels 2 in die Grundposition 12 ändert sich zwangsläufig auch die entsprechende Belegung der Wählpositionen mit anwählbaren Fahrstufen. Das Ergebnis der D-Fahrstufenanwahl gemäß Fig. 3 ist in Fig. 4 dargestellt. Der Grundposition 12, die in den Fig. 3 - 6 jeweils durch den schwarz hinterlegten Wählhebel 2 dargestellt ist und sich zwangsläufig immer mittig befindet, ist gemäß Fig. 4 die D-Fahrstufe zugeordnet. Um eine andere Fahrstufe zu wählen, ist ausgehend von dieser Situation der Wählhebel zwangsläufig in eine der Wählpositionen 13a - 13c zu bewegen. In diesem Fall wäre der Wählposition 13a die N-Fahrstufe, der Wählposition 13b die R-Fahrstufe und der Wählposition 13c die P-Fahrstufe zugeordnet. In den Anzeigepositionen 17a wäre ein "N"-Symbol, in der Anzeigeposition 17b ein "R"-Symbol und in der Anzeigeposition 17b ein "P"-Symbol dargestellt, um den Fahrer wiederum eine Hilfe zu geben. Die Wählpositionen 13d - 13f wären in diesem Fall wiederum gesperrt, da ihnen keine wählbaren Fahrstufen zugeordnet sind.

Fig. 5 zeigt ein weiteres Wählschema. Hier ist dem Wählhebel 2 in der Grundposition 12 die N-Fahrstufe zugeordnet. Will der Fahrer nun die D-Fahrstufe einlegen, so wäre der Wählhebel dem starren Schema P-R-N-D folgend nach unten in die Wählposition 13d zu bewegen, in der Anzeigeposition 17d wäre das "D"-Symbol dargestellt. Zum Anwählen der R-Fahrstufe wäre der Wählhebel in die Wählposition 13a zu bewegen, zum Anwählen der P-Fahrstufe in die Wählposition 13b. In den zugeordneten Anzeigenpositionen 17a, 17b wären entsprechende "R"- und "P"-Symbole dargestellt.

Entsprechend setzt sich das Schaltschema zusammen, wenn der Grundposition 12 die R-Fahrstufe zugeordnet ist. Zum Anwählen der P-Fahrstufe wäre der Wählhebel in die Wählposition 13a zu bewegen, zum Anwählen der N-und der D-Fahrstufe in die Wählpositionen 13d bzw. 13e. In den entsprechenden Anzeigepositionen 17a, 17d und 17e wären entsprechende "P"-, "R"-, "N"- und "D"-Symbole dargestellt.

Ersichtlich kann also durch Realisierung der insgesamt sechs Wählpositionen und der siebten Grundposition ein intuitives Schaltschema realisiert werden, dass trotz monostabilem Wählhebel 2 die Anwahl sämtlicher der vier Fahrstufen ermöglicht.

Fig. 7 zeigt ein weiteres Ausführungsbeispiel einer erfindungsgemäßen Schalteinheit 1, die von der Funktionalität hinsichtlich der Wahl der Fahrstufen P-R-N-D der Schalteinheit 1 aus den Fig. 1 - 6 entspricht. Hier ist jedoch keine zweite Schaltgasse 15 zur manuellen Tippschaltung realisiert. Vielmehr ist hier ein Schaltmittel 18 in Form einer Taste vorgesehen, die mit einem +/- Symbol gekennzeichnet ist. Wird dieses Schaltmittel 18 betätigt, so wird die Funktionalität der Schalteinheit 1 von einer Fahrstufenfunktionalität auf eine Tippschaltungsfunktionalität umgestellt, die jedoch nach wie vor in der Schaltgasse 14 realisiert ist. Der Wählhebel befindet sich immer in der Grundposition 12. Wenigstens den Wählpositionen 13a und 13d, vorzugsweise auch den Wählpositionen 13b und 13e, gegebenenfalls sogar den Wählpositionen 13c und 13f kommen Schaltfunktionen zu, über die der jeweils eingelegte Gang manuell herauf- oder heruntergeschaltet werden kann. Dies ist dem Fahrer durch das "+"-Symbol in der Anzeigeposition 17a bzw. das "-"-Symbol in der Anzeigeposition 17d dargestellt, d. h., er erkennt hierüber, in welche Richtung er den Wählhebel 2 bewegen muss, um einen Gang heraufzuschalten (+) bzw. um einen Gang herunterzuschalten (-). Wenn der Fahrer den Wählhebel beispielsweise zunächst in die Wählposition 13d bewegt, wird ein erster Gang heruntergeschalten, zieht er ihn weiter in die Wählposition 13e, wird um einen zweiten Gang heruntergeschalten und - sofern vorgesehen bzw. vom Getriebe her zulässig - bei einer Bewegung in die Wählposition 13f wird um einen dritten Gang heruntergeschaltet. D. h., im Rahmen einer einzigen Bewegung kann um mehrere Gänge heruntergeschaltet werden, ohne dass der Fahrer hierfür absetzen muss, wie dies bei der manuellen Tippschaltung gemäß Fig. 2 der Fall wäre. Lässt der Fahrer den Wählhebel nach Erreichen beispielsweise der Positionen 13e oder 13f los, so stellt er sich wieder in die Grundposition 12 zurück. Will der Fahrer nun wieder heraufschalten, so wäre der Wählhebel 2 in die entgegensetzte Richtung in eine der Positionen 13a, 13b oder 13c zu bewegen, wobei auch hier in einem Bewegungsgang um einen, zwei oder drei Gänge höhergeschaltet werden kann.

Exemplarisch ist hier gestrichelt eine weitere Schaltgasse 19 dargestellt, die dem Anwählen einer Sport-Fahrstufe S dient. Der Wählhebel kann, beispielsweise nur dann, wenn der Grundstellung die Fahrstufe D zugeordnet ist, nach rechts in diese Schaltgasse 19 gelegt werden, wo er rastiert. Es wird dann die S-Fahrstufe eingelegt. Alternativ zur Vorsehung einer separaten Schaltgasse ist es auch denkbar, hierzu ein ebenfalls nur gestrichelt gezeigtes Schaltelement 20 vorzusehen. Wird dieses Schaltelement 20, das beispielsweise nur dann aktiviert ist, wenn der Grundposition 12 die Fahrstufe D zugeordnet ist, gedrückt, wird automatisch die S-Fahrstufe eingelegt.

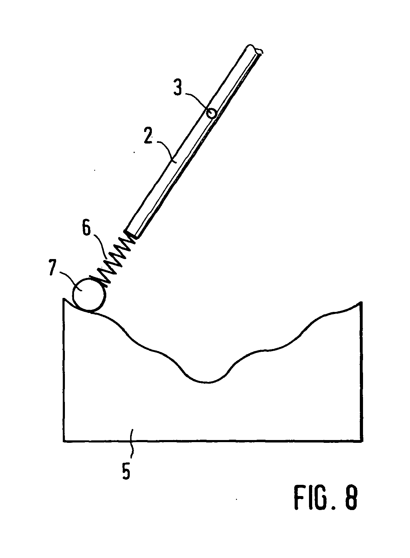

Fig. 8 zeigt schließlich eine weitere Ausführung einer Kulissenführung 5, die in Verbindung mit der hebelseitig angeordneten Feder 6 und dem Laufelement 7, vorzugsweise einer Rolle, eine automatische mechanische Hebelrückstellung ermöglicht. Die Oberseite der Führung 5 ist wellenförmig profiliert, weist aber, anders als in Fig. 1, keine ausgezeichneten Senken auf. Die Feder 6 kann, weil gespannt, durch ihre Rückstellkraft den Hebel aus jeder Wählposition wieder in die Grundstellung zurückführen, gleichwohl ist eine hinreichende Haptik über die wellenförmige Oberflächenstruktur gewährleistet.

Abschließend ist festzuhalten, dass bezüglich der Ausgestaltung der Schalteinheit nach den Fig. 1 - 6 grundsätzlich die Möglichkeit besteht, auch die zweite Schaltgasse 15 ähnlich wie die erste Schaltgasse 14 mit jeweils zwei oder mehr Druckpunkten bzw. Wählpositionen in der jeweiligen Richtung auszugestalten, um so mit einer einzigen Bewegung in einer Richtung ein manuelles Schalten von zwei oder mehr Gängen zu ermöglichen, ähnlich wie dies mit der einzigen Schaltgasse 14 der Schalteinheit in Fig. 7 realisiert ist.

## Patentansprüche

1. Schalteinheit für ein elektronisch geschaltetes Getriebe, umfassend einen Wählhebel, der zum Anwählen von verschiedenen getriebeseitig einzulegenden Fahrstufen in verschiedene Wählpositionen bewegbar ist,
**dadurch gekennzeichnet,**
**dass** über den Wählhebel (2) wenigstens vier verschiedene Fahrstufen (R, P, N, D) anwählbar sind, wobei der Wählhebel (2) aus einer stabilen Grundposition (12) heraus in zwei entgegengesetzte Richtungen bewegbar ist, entlang welcher jeweils wenigstens drei nicht rastierte, über einen Druckpunkt (8) definierte Wählpositionen (13a, ..., 13f) realisiert sind, aus denen der Wählhebel (2) automatisch in die Grundposition (12) rückstellbar ist.

2. Schalteinheit nach Anspruch 1,
**dadurch gekennzeichnet,**
**dass** der Wählhebel (2) gegen ein mechanisches Rückstellelement (10) in die jeweilige Richtung bewegbar ist.

3. Schalteinheit nach Anspruch 1,
**dadurch gekennzeichnet,**
**dass** der Wählhebel (2) über ein elektrisches oder elektro-mechanisches oder hydraulisches oder pneumatisches Rückstellmittel ist.

4. Schalteinheit nach einem der vorangehenden Ansprüche,
**dadurch gekennzeichnet,**
**dass** die Druckpunkte (8) über eine mechanische Führung (5) des Wählhebels (2), insbesondere eine Kulissenführung, auf oder in welcher der Wählhebel (2) gleitet, realisiert sind.

5. Schalteinheit nach einem der vorangehenden Ansprüche,
**dadurch gekennzeichnet,**
**dass** ihr ein Schaltmittel (18) zugeordnet ist, über das die Funktionalität der Schalteinheit (1) auf eine manuelle Tippschaltung einzelner Gänge reversibel umschaltbar ist.

6. Schalteinheit nach Anspruch 5,
**dadurch gekennzeichnet,**
**dass** ausgehend von der Grundposition (12) bei Bewegen in wenigstens zwei aufeinanderfolgende Wählpositionen (13a, ..., 13f) in eine Richtung mit Erreichen jeder Wählposition (13a, ..., 13f) der Gang herauf- oder herunterschaltbar ist.

7. Schalteinheit nach einem der Ansprüche 1 bis4,
**dadurch gekennzeichnet,**
**dass** von einer ersten Schaltgasse (14), längs welcher der Wählhebel (2) zum Schalten der Fahrstufen bewegbar ist, eine zweite Schaltgasse (15) abzweigt, in welcher der Wählhebel (2) für eine manuelle Tippschaltung einzelner Gänge bewegbar ist.

8. Schalteinheit nach Anspruch 6,
**dadurch gekennzeichnet,**
**dass** der Wählhebel (2) ausgehend von einer Grundposition in zwei entgegengesetzte Richtungen bewegbar ist, längs welcher wenigstens zwei nicht rastierte, über einen Druckpunkt definierte Wählpositionen realisiert sind, aus denen der Wählhebel automatisch in die Grundposition rückstellbar ist, wobei ausgehend von der Grundposition bei Bewegen in wenigstens zwei aufeinanderfolgende Druckpunkte in eine Richtung mit Erreichen jedes Druckpunkts der Gang herauf- oder herunterschaltbar ist.

9. Schalteinheit nach einem der vorangehenden Ansprüche,
**dadurch gekennzeichnet,**
**dass** die Wählhebelbewegung aus der Grundposition (12) oder aus oder in eine beliebige Wählposition (13a, ..., 13f) mechanisch sperrbar ist.

10. Schalteinheit nach einem der Ansprüche 1 bis 8,
**dadurch gekennzeichnet,**
**dass** der Wählhebel (2) auch in eine Wählposition (13a, ..., 13f) bringbar ist, der keine Fahrstufe zugeordnet ist.

11. Schalteinheit nach einem der vorangehenden Ansprüche,
**dadurch gekennzeichnet, dass**
dass ein Anzeigemittel (16) vorgesehen ist, an dem die jeweils anwählbare und/oder eingelegte Fahrstufe darstellbar ist.

12. Schalteinheit nach Anspruch 11,
**dadurch gekennzeichnet,**
**dass** das Anzeigemittel (16) mehrere der Anzahl und vorzugsweise der Position an Grund- und Wählpositionen entsprechende Anzeigepositionen (17a, ..., 17f) für die eingelegte und die anwählbaren Fahrstufen aufweist.

13. Schalteinheit nach einem der vorangehenden Ansprüche,
**dadurch gekennzeichnet,**
**dass** ein Schaltelement (20) vorgesehen ist, über das eine weitere, nicht über den Wählhebel (2) anwählbare Fahrstufe anwählbar ist, oder dass der Wählhebel (2) ausgehend von der Grundposition (12) in eine seitlich zur Schaltgasse (14) abzweigende Wählposition (19) bewegbar ist.

14. Kraftfahrzeug, umfassend ein elektronisch geschaltetes Getriebe sowie eine Schalteinheit (1) nach einem der vorangehenden Ansprüche.
